# EUROPÄISCHE PATENTANMELDUNG

(11) **EP 3 427 866 A2**
(43) Veröffentlichungstag der Anmeldung: **16.01.2019**
(21) Anmeldenummer: 18181137.3
(22) Anmeldetag: 02.07.2018
(51) Int. Cl.: B22F 1/00, B22F 1/02, C22C 1/05, C22C 32/00

(54) **VERFAHREN ZUR HERSTELLUNG EINES KRIECHBESTÄNDIGEN WERKSTOFFS**

(30) Priorität: 13.07.2017 DE 102017115784
(71) Anmelder: Rolls-Royce Deutschland Ltd & Co KG, 15827 Blankenfelde-Mahlow (DE)
(72) Erfinder: Roth-Fagaraseanu, Dan, 14532 Stahnsdorf (DE); Daenicke, Enrico, 15827 Blankenfelde-Mahlow (DE)
(74) Vertreter: Müller, Wolfram Hubertus

(57) **Zusammenfassung**

Die Erfindung betrifft Verfahren zur Herstellung eines kriechbeständigen Werkstoffs. Eines der Verfahren sieht vor: Bereitstellen (301) eines Metallpulvers (1); Bereitstellen (302) von metallischen oder keramischen Nanopartikeln (6); Vermischen (303, 304) des Metallpulvers mit den Nanopartikeln (6), wobei bei dem Vermischen die Partikel des Metallpulvers (1) und die Nanopartikel (6) weder in ihrer Größe noch in ihrer Form verändert werden; und Konsolidieren (306) der Mischung von Metallpulver (1) und Nanopartikeln (6) zur Bildung eines Werkstoffs mit einer polykristallinen Metallstruktur, wobei die aus der Konsolidierung hervorgegangenen Einzelkristalle (4) der polykristallinen Metallstruktur aus den Partikeln des Metallpulvers entstanden und durch Korngrenzen (5) voneinander getrennt sind, und wobei an den Korngrenzen (5) die Nanopartikel (6) angeordnet sind.

## Beschreibung

Die Erfindung betrifft Verfahren zur Herstellung eines kriechbeständigen Werkstoffs.

Es besteht allgemein ein Bedarf, kriechbeständige Werkstoffe bereitzustellen. Solche werden beispielsweise in Gasturbinen, insbesondere Flugtriebwerken eingesetzt. Ein bekanntes Verfahren zur Herstellung kriechbeständiger Werkstoffe besteht darin, durch Gießen mit anschließender komplexer Wärmebehandlung kriechresistente Einkristalle herzustellen.

Des Weiteren sind sogenannte Oxid-dispersionsverfestigte (ODS) Legierungen bekannt. ODS Legierungen bestehen aus einer Metalllegierung in Pulverform mit relativ geringer Kriechfestigkeit und guter Umformbarkeit, in die über mechanisches Legieren in einem langwierigen und energieaufwändigen Pulvermahlprozess nano-skalige Oxide, zum Beispiel Yttriumoxid eingemahlen wird. Das gemahlene Pulver wird über Pressen und Sintern als einfache Geometrie verdichtet und anschließend zum finalen Bauteil nachbearbeitet. Das genannte Verfahren ist nicht nur aufwändig und teuer, sondern birgt auch die Gefahr des Eintragens von Verunreinigungen in sich.

Aus der EP 1 313 581 B1 ist ein Verfahren zur Herstellung von Verbundbauteilen durch Pulverspritzgießen bekannt. Dabei werden Metall-Verbundpulver eingesetzt, die zwei oder mehr verschiedene Metalle enthalten. Gemäß einer Ausgestaltung werden dem Metall-Verbundpulver oxidische Keramik-Komponenten zugesetzt, die auch in Form von Nanopulvern vorliegen können. Das Verbundpulver wird vor der Mischung mit einem Binder und vor einem Pulver-Spritzgießen mit einer Schutzflüssigkeit versetzt, die das Verbundpulver vor dem Kontakt mit Sauerstoff schützt. Als Ergebnis stellt das Verfahren ein Verbundbauteil her.

Die DE 10 2004 063 052 A1 beschreibt ein Verfahren zur Herstellung eines molybdänbasierten Nano-Verbundwerkstoffes, der eine Vielzahl von in einer molybdänbasierten metallischen Matrix verteilte Nanopartikel aufweist. Der Nano-Verbundwerkstoff enthält einen hohen Anteil an Nanopartikeln im Bereich zwischen 2 Volumenprozent und 20 Volumenprozent des molybdänbasierten Nano-Verbundwerkstoffes. Im Einzelnen sieht das Verfahren vor, dass die Nanopartikel in-situ durch Mechanofusion, mechanisches Legieren, Tieftemperaturmalen oder Kombinationen davon gebildet werden. Damit sieht die DE 10 2004 063 052 A1 einen Umformprozess zur Bereitstellung der Nanopartikel und zur Bildung eines Nanoverbundes vor.

Die genannten Verfahren sind aufwendig und teuer und/oder in ihrer Materialauswahl beschränkt. Es besteht ein Bedarf nach Verfahren, die kriechbeständige Werkstoffe in einfacherer Weise, insbesondere ohne ein mechanisches Legieren bereitstellen.

Der vorliegenden Erfindung liegt dementsprechend die Aufgabe zugrunde, Verfahren zur Herstellung von kriechbeständigen Werkstoffen bereitzustellen, die ohne ein mechanisches Legieren auskommen.

Diese Aufgabe wird durch ein Verfahren mit den Merkmalen des Anspruchs 1 und ein Verfahren mit den Merkmalen des Anspruchs 9 gelöst. Ausgestaltungen der Erfindung sind in den abhängigen Ansprüchen angegeben.

Danach betrachtet die Erfindung in einem ersten Erfindungsaspekt ein Verfahren zur Herstellung eines kriechbeständigen Werkstoffs, das die Schritte umfasst:
- Bereitstellen eines Metallpulvers,
- Bereitstellen von metallischen oder keramischen Nanopartikeln,
- Vermischen des Metallpulvers mit den Nanopartikeln, wobei bei dem Vermischen die Partikel des Metallpulvers und die Nanopartikel weder in ihrer Größe noch in ihrer Form verändert werden, und
- Konsolidieren der Mischung von Metallpulver und Nanopartikeln zur Bildung eines Werkstoffs mit einer polykristallinen Metallstruktur, wobei
- die aus der Konsolidierung hervorgegangenen Einzelkristalle der polykristallinen Metallstruktur aus den Partikeln des Metallpulvers entstanden und durch Korngrenzen voneinander getrennt sind, und wobei an den Korngrenzen die Nanopartikel angeordnet sind.

Danach stellt die vorliegende Erfindung ein Verfahren zur Herstellung eines kriechbeständigen Werkstoffs bereit, der eine polykristalline Metallstruktur aufweist, die aus der Konsolidierung eines Metallpulvers hervorgegangen ist, wobei die aus der Konsolidierung hervorgegangenen Einzelkristalle der polykristallinen Metallstruktur aus den Partikeln des Metallpulvers entstanden und durch Korngrenzen voneinander getrennt sind. An den Korngrenzen sind die metallischen oder keramischen Nanopartikel angereichert.

Das Verfahren zeichnet sich dadurch aus, dass das Vermischen des Metallpulvers mit den Nanopartikeln erfolgt, ohne dass das Metallpulver oder die Nanopartikel in ihrer Größe oder in ihrer Form verändert werden. Hierdurch wird das Verfahren gegenüber bekannten Verfahren zur Herstellung Oxid-dispersionsverfestigter (ODS) Legierungen deutlich vereinfacht. Die Erfindung beruht dabei auf der überraschenden Erkenntnis, dass bereits durch das einfache Vermischen (ohne eine Zerkleinerung) von Metallpulver und Nanopartikeln die Nanopartikel sich ausreichend an den Oberflächen der Partikel des Metallpulvers anordnen, so dass nach einer Konsolidierung der Pulvermischung die Nanopartikel dann an den Korngrenzen der Einzelkristalle der bei der Konsolidierung entstandenen polykristallinen Metallstruktur anliegen und dadurch die Kriechbeständigkeit des Werkstoffs steigern.

Bei dem mit dem erfindungsgemäßen Verfahren hergestellten polykristallinen Metallstruktur sitzen die Nanopartikel ausschließlich an den Korngrenzen. Die Nanopartikel bilden dabei keinen Nanoverbund, d.h. sie sind nicht als Gitterpunkte in das Metallgitter eingebaut, und sie sind nicht durch einen Umformprozess entstanden.

Die Steigerung der Kriechbeständigkeit des Werkstoffs beruht darauf, dass an den Korngrenzen angeordnete Partikel verhindern, dass die Korngrenzen bei hohen Temperaturen unter Last aneinander gleiten. Die Einzelkristalle sind durch die an den Korngrenzen angelagerten Partikel gewissermaßen aneinander gepinnt bzw. in ihrer Verschiebbarkeit reduziert. Auf diese Weise wird die Kriechbeständigkeit des Werkstoffs verbessert. In diesem Sinne stellt die Erfindung einen kriechbeständigen Werkstoff bereit.

Dass beim Verfahrensschritt des Vermischens die Partikel des Metallpulvers und die Nanopartikel weder in ihrer Größe noch in ihrer Form verändert werden bedeutet insbesondere, dass die typischerweise kugelförmigen Metallpulverpartikel beim Vermischen ihre Kugelform behalten. Dass beim Verfahrensschritt des Vermischens die Partikel des Metallpulvers und die Nanopartikel weder in ihrer Größe noch in ihrer Form verändert werden bedeutet des Weiteren, dass keine Nanopartikel beim Vermischen erzeugt werden. Diese werden vielmehr bereits als Ausgangssubstanz für das Verfahren bereitgestellt.

Als polykristalline Metallstruktur wird eine kristalline Metallstruktur bezeichnet, die aus Einzelkristallen besteht, die durch Korngrenzen voneinander getrennt werden. Die Einzelkristalle sind dabei durch die Konsolidierung des Metallpulvers entstanden und entsprechen den verfestigten Metallpartikeln des Metallpulvers.

Eine Ausgestaltung der Erfindung sieht vor, dass das Vermischen des Metallpulvers mit den Nanopartikeln durch Mahlen in einer Mühle erfolgt, wobei beim Vermischen die Nanopartikel sich an den Oberflächen der Partikel des Metallpulvers anordnen, und wobei die Mahldauer, die Art der Mühle und die Größe der Partikel des Metallpulvers und der Nanopartikel derart aufeinander abgestimmt sind, dass beim Mahlen die Partikel des Metallpulvers und die Nanopartikel weder in ihrer Größe noch in ihrer Form verändert werden. Bei der Mühle handelt es sich beispielsweise um eine Planetenkugelmühle. Als Mahlelement werden beispielsweise Stahlkugeln eingesetzt.

Die Mahldauer liegt beispielsweise im Bereich zwischen 5 min und 30 min, insbesondere im Bereich zwischen 10 min und 20 min. Es liegt also eine relativ kurze Mahldauer vor, die nicht dazu dient, die Partikel zu verformen und/oder zu zerkleinern.

Gemäß einer Ausführungsvariante erfolgt das Vermischen des Metallpulvers mit den Nanopartikeln durch Mahlen unter einer Edelgas-Schutzatmosphäre, beispielsweise in einer Argon-Atmosphäre.

Eine weitere Ausführungsvariante sieht vor, dass der Schritt des Vermischens unter Verwendung eines Mahlhilfsmittels erfolgt, das die Haftung der Nanopartikel an der Metalloberfläche erhöht. Solche Mahlhilfsmittel sind an sich bekannt und Fördern typischerweise die Benetzbarkeit der Oberflächen und/oder Reduzieren die Gefahr einer Verklumpung. Das Mahlhilfsmittel ist beispielsweise eine Mahlhilfe auf Polysaccharidbasis.

Ein alternatives Ausführungsbeispiel sieht vor, dass der Schritt des Vermischens das Mischen des Metallpulvers und der Nanopartikel in einer wässrigen Suspension umfasst. Dabei kann vorgesehen sein, dass die Nanopartikel in der wässrigen Suspension bereitgestellt werden. Alternativ wird die Flüssigkeit den Metallpartikeln und den Nanopartikeln zugegeben.

Das Mischen des Metallpulvers und der Nanopartikel in einer wässrigen Suspension kann beispielsweise ultraschallgestützt erfolgen. Weiter kann vorgesehen sein, dass die wässrige Suspension nach dem Mischen getrocknet wird, wobei sich beim Trocknen der wässrigen Suspension eine Verteilung der Nanopartikel auf den Oberflächen der Partikel des Metallpulvers bildet. Das Trocknen ist jedoch nur optional. Wenn beispielsweise eine Konsolidierung durch Metallpulverspritzgießen erfolgt, kann alternativ die durchmischte wässrige Suspension ohne ein vorheriges Trocknen mit einem Binder gemischt werden.

Gemäß einer Ausgestaltung der Erfindung wird die Mischung von Metallpulver und Nanopartikeln durch Metallpulverspritzgießen konsolidiert. Das Metallpulverspritzgießen erfolgt in an sich bekannter Weise und umfasst die Schritte: Bereitstellen eines spritzgussfähigen Metallpulvergemischs, Spritzgießen des spritzgussfähigen Metallpulvergemischs in einer Spritzgussmaschine, Entbindern des entstandenen Grünlings, wobei ein Bräunling des Bauteils entsteht, und Sintern des Bräunlings.

Bei der Konsolidierung durch Metallpulverspritzgießen handelt es sich jedoch lediglich um ein Ausführungsbeispiel. Die Mischung von Metallpulver und Nanopartikeln kann grundsätzlich über verschiedene Verfahren konsolidiert und mit einer gewünschten Form versehen werden. Alternative mögliche Verfahren sind heißisostatisches Pressen und selektives Laserschmelzen.

Gemäß einem weiteren Erfindungsaspekt betrifft die Erfindung ein Verfahren zur Herstellung eines Bauteils aus einer kriechbeständigen Legierung, bei dem ein Metallpulver aus Metallpartikeln, ein Binder und eine Suspension mit Nanopartikeln, die einen kleineren mittleren Durchmesser aufweisen als die Metallpartikel des Metallpulvers, zu einem spritzgussfähigen Metallpulvergemisch gemischt werden. Das auf diese Weise hergestellte spritzgussfähige Metallpulvergemisch wird anschließend in einem Spritzgussverfahren eingesetzt, in dem das Metallpulvergemisch konsolidiert und zu dem Bauteil aus einer kriechbeständen Legierung geformt wird. Bei der Konsolidierung lagern sich die Nanopartikel des Metallpulvergemischs an den Korngrenzen der polykristallinen Metallstruktur an, die bei der Konsolidierung des Metallpulvergemisches entsteht.

Danach basiert dieser Erfindungsaspekt auf dem Gedanken, ein Metallpulverspritzgussverfahren (auch als MIM-Prozess (MIM = "Metal Injection Moulding") bezeichnet) im Hinblick auf die Kriechbeständigkeit des gesinterten Bauteils zu verbessern, indem das spritzgussfähige Metallpulvergemisch (auch als Feedstock bezeichnet), das den Ausgangspunkt des Metallpulverspritzgussverfahrens bildet, mit Nanopartikeln angereichert wird.

Dieser Erfindungsaspekt beruht dabei auf der Erkenntnis, dass die Nanopartikel, die der zusätzlichen Suspension des Feedstocks beigemischt werden, während des Entbinderns und/oder des Sinterns im Werkstoff zurückbleiben und sich fein verteilt auf den Korngrenzen des Werkstoffs anlagern. Durch ihre Anlagerung auf den Korngrenzen verhindern sie, dass die Korngrenzen bei hohen Temperaturen unter Last aneinander gleiten. Auf diese Weise wird die Kriechbeständigkeit des Werkstoffs verbessert.

Dabei hat sich gezeigt, dass es durch die Einbringung der Nanopartikel in eine Suspension möglich ist, Agglomerationen der Nanopartikel zu verhindern und hierdurch zu ermöglichen, die Nanopartikel weitgehend homogen im Feedstock zu verteilen.

Das eigentliche Metallpulverspritzgussverfahren erfolgt in an sich bekannter Weise und umfasst die Schritte:
- Bereitstellen eines spritzgussfähigen Metallpulvergemischs,
- Spritzgießen des spritzgussfähigen Metallpulvergemischs in einer Spritzgussmaschine;
- Entbindern des entstandenen Grünlings, wobei ein Bräunling des Bauteils entsteht, und
- Sintern des Bräunlings.

Das nach dem Spritzgießen abgekühlte Pulvergemisch bildet dabei einen Grünling des Bauteils. Nach dem Entformen aus der Spritzgussmaschine wird der entstandene Grünling entbindert, wobei ein Bräunling entsteht. Während des Sinterns erfolgt ein Schrumpfungsprozess des Bauteils. Das Resultat ist ein hochkriechfester Werkstoff, in dem der Kriechwiderstand an den Korngrenzen über die eingebrachten Nanopartikel erhöht ist.

Eine weitere Ausgestaltung sieht vor, dass die Konzentration der Nanopartikel in der Mischung von Metallpulver und Nanopartikeln im Bereich zwischen 0,1 und 3 Massenprozent, insbesondere im Bereich zwischen 0,2 und 1 Massenprozent, insbesondere im Bereich zwischen 0,3 und 0,7 Massenprozent liegt. Beispiele der Konzentration der Nanopartikel in der Mischung von Metallpulver und Nanopartikeln sind somit 0,5%, 1 % und 3%.

Die Nanopartikel weisen gemäß einer Ausführungsvariante Durchmesser auf, die im Bereich zwischen 10 nm und 5 µm, insbesondere im Bereich zwischen 10 nm und 1 µm, insbesondere im Bereich zwischen 300 nm und 700 nm liegen. Die Partikel des Metallpulvers bzw. Einzelkristalle des Werkstoffs weisen beispielsweise Durchmesser auf, die im Bereich zwischen 20 µm und 300 µm (D100 = 300 µm) liegen. Dies ist dahingehend zu verstehen, dass die Partikel bzw. Einzelkristalle eine Größenverteilung aufweisen, die innerhalb der genannten Bereiche liegen, jedoch diese Bereiche nicht notwendigerweise vollständig umfasst. Beispielsweise kann vorgesehen sein, dass die Nanopartikel alle annähernd die gleiche Größe aufweisen und beispielsweise eine Siebgröße zwischen 20 nm und 80 nm besitzen.

Die Siebgröße wird durch die Einheit Mesh definiert. Das Mesh ist eine Einheit der Maschenweite. Gleichzeitig bezeichnet das Mesh auch die Korngröße von entsprechend gesiebtem Material. Die größte und die kleinste Siebgröße geben somit die größten und die kleinsten Korngrößen eines Gemisches an. Das arithmetische Mittel der Korngrößen gibt dagegen der mittlere Durchmesser an.

Eine weitere verwendbare Größe zur Charakterisierung von Partikelgemischen ist der D-Faktor. Es ist dies der Durchmesser, der, wenn alle Partikel eines Gemisches mit aufsteigender Masse sortiert sind, das Gewicht des Gemisches in bestimmte Prozentanteile unterteilt. Ein D-Faktor von 30 gibt somit den Durchmesser an, bei dem 30 % des Gewichtes des Gemisches durch kleinere Partikel und 70 % des Gewichtes des Gemisches durch größere Partikel bereitgestellt wird. Gemäß einer Ausgestaltung der Erfindung liegt der Faktor D50 der Nanopartikel im Bereich zwischen 10 nm und 100 nm, insbesondere im Bereich zwischen 40 nm und 80 nm, d.h. 50% aller Nanopartikel sind kleiner als dieser Wert.

Ein Ausführungsbeispiel sieht vor, dass die Nanopartikel einen D90-Faktor kleiner oder gleich 2 µm und einen D50-Faktor kleiner oder gleich 500 nm aufweisen.

Gemäß einem Ausführungsbeispiel weisen die Metallpulverpartikel einen D50-Faktor auf, der im Bereich zwischen 10 µm und 40 µm liegt. Beispielsweise liegt in einem Ausführungsbeispiel der D10 Faktor bei 5 bis 7 µm, insbesondere bei 6 µm, der D50 Faktor bei 16 bis 20 µm, insbesondere bei 18 µm und der D90 Faktor bei 30 bis 40 µm, insbesondere bei 35 µm.

Die eingesetzten Nanopartikel können metallische Partikel oder keramische Partikel sein. Ausgestaltungen der Erfindung sehen vor, dass die Nanopartikel Oxide, insbesondere Keramikoxide sind. Sie bilden dann ein Oxidpulver. Beispiele für geeignete Nanopartikel sind Yttriumoxid, Aluminiumoxid oder Zirkonoxid. Beispielsweise kann unter dem Handelsnamen Alumina CT3000 LS SG verkauftes Aluminiumoxid der Firma Almatis eingesetzt werden.

Weiter kann vorgesehen sein, dass die Metallpulverpartikel eine spezifische Oberfläche im Bereich zwischen 0,05 m²/g und 0,2 m²/g aufweisen.

Als Metallpulver werden gemäß einer Ausgestaltung der Erfindung Nickel-Basis-Legierungen und/oder Kobalt-Basis-Legierungen verwendet. Das Metallpulver, d.h. jedes der Metallpartikel wird somit durch eine Legierung gebildet. Dementsprechend handelt es sich bei dem durch das erfindungsgemäße Verfahren hergestellten Werkstoff um eine kriechbeständige Legierung. Beispiele für verwendete Legierungen sind hochlegierte Nickelbasis-Legierungen mit den Bezeichnungen Inconel 713, Inconel 738, CM247 bzw. MAR M247, C263 oder C1023.

Sofern gemäß der einen Erfindungsvariante ein Metallpulver aus Metallpartikeln, ein Binder und eine Suspension mit Nanopartikeln zu einem spritzgussfähigen Metallpulvergemisch gemischt werden, sieht eine Ausgestaltung vor, dass die Suspension mit nano-skaligen metallischen Partikeln versetzt wird, die während des Sintervorgangs keramische Partikel bilden. Beispielsweise werden als nano-skalige Partikel Aluminiumpartikel verwendet, die nach Oxidation das keramische Al₂O₃ bilden.

Das homogene Vermischen der Suspension, die die Nanopartikel aufweist, mit den weiteren Komponenten des Feedstocks kann auf verschiedene Weise erfolgen. Gemäß einer ersten Variante ist vorgesehen, dass die Suspension mit dem Metallpulver vermischt und diese Mischung anschließend mit dem Binder zu einem spritzgussfähigen Metallpulvergemisch vermischt wird. Ein Vorteil dieser Variante ist, dass die Nanopartikel sich bereits vor dem Vermischen mit dem Binder verstärkt an die Korngrenzen der Metallpartikel anlegen können. Dabei kann vorgesehen sein, dass vor einem Mischen mit dem Binder die Mischung von Suspension und Metallpulver getrocknet wird, um das Dispersionsmedium vor dem Mischen mit dem Binder zu verflüchtigen

Eine zweite Variante sieht vor, dass die Suspension mit dem Binder vermischt und diese Mischung anschließend mit dem Metallpulver zu einem spritzgussfähigen Metallpulvergemisch vermischt wird. Bei dieser Variante sind die Nanopartikel verstärkt im Binder enthalten. Im Grünling befindet sich der Binder in den Zwischenräumen zwischen den Metallpartikeln. Beim Entbindern, das chemisch oder thermisch erfolgen kann, verbleiben die Nanopartikel in den Zwischenräumen. Beim Sintern, wenn die Zwischenräume zwischen den Metallpartikeln verschwinden, lagern sie sich dann automatisch an den Korngrenzen der Metallpartikel an.

Gemäß einer dritten Variante werden die Suspension, das Metallpulver und der Binder gleichzeitig zu einem spritzgussfähigen Metallpulvergemisch vermischt.

Sofern gemäß der einen Erfindungsvariante ein Metallpulver aus Metallpartikeln, ein Binder und eine Suspension mit Nanopartikeln zu einem spritzgussfähigen Metallpulvergemisch gemischt werden, sieht eine Ausgestaltung vor, dass der Volumenanteil des Binders bei 30-50 Volumenprozent liegt. Dementsprechend liegt der Volumenanteil des Metallpulvers - bei Vernachlässigung des Volumenanteils der Suspension bzw. der Nanopartikel - bei etwa 50-70 Volumenprozent.

Das Metallpulver kann grundsätzlich jedes spritzgussfähige Metallpulver sein. Gemäß einer Ausgestaltung weist das Metallpulver Nickel- und/oder Kobalt-Basis-Legierungen auf. Beispiele hierfür sind wie bereits erwähnt die Legierungen C1023, C263, CM247, Inconel 713 und Inconel 738. Das Metallpulver weist einen D100-Faktor beispielsweise im Bereich zwischen 30 µm und 300 µm auf. Der D50-Faktor liegt beispielsweise im Bereich zwischen 15 µm und 50 µm. In jedem Fall ist die mittlere Korngröße des Metallpulvers größer als die mittlere Korngröße der Nanopartikel, insbesondere um mindestens den Faktor 10, insbesondere um mindestens den Faktor 100.

Das Bindersystem für den Feedstock kann aus unterschiedlichen Polymeren bestehen. Beispielsweise werden Polyamide, Wachs und/oder Polyoxymethylen (POM) sowie in Ausführungsvarianten benetzungsfördernde Zusätze eingesetzt. Beispielsweise wird ein Binder verwendet, der aus einer Mischung aus Wachs und POM besteht.

Eine weitere Ausgestaltung der Erfindung sieht vor, dass die Nanopartikel aus einem anderen Material als die Metallpartikel des Metallpulvers bestehen. Dies wird in aller Regel der Fall sein.

Gemäß einem weiteren Erfindungsaspekt betrifft die Erfindung einen kriechbeständigen Werkstoff, der dadurch gekennzeichnet ist, dass er durch das Verfahren gemäß Anspruch 1 oder durch das Verfahren gemäß Anspruch 9 hergestellt ist, ggf. unter Einsatz der in den abhängigen Ansprüchen angegebenen zusätzlichen Verfahrensschritte. Der kriechbeständige Werkstoff weist eine polykristalline Metallstruktur auf, die aus der Konsolidierung eines Metallpulvers hervorgegangen ist, wobei die aus der Konsolidierung hervorgegangenen Einzelkristalle der polykristallinen Metallstruktur aus den Partikeln des Metallpulvers entstanden und durch Korngrenzen voneinander getrennt sind. An den Korngrenzen sind metallische oder keramische Nanopartikel angereichert.

In bevorzugten Ausgestaltungen der Erfindung wird mit dem erfindungsgemäßen Verfahren ein Bauteil einer Gasturbine, insbesondere eines Flugtriebwerks hergestellt. Beispielhafte Anwendungen liegen in der Herstellung von Bauteilen der Brennkammer oder der Turbine einer Gasturbine.

Die Erfindung wird nachfolgend unter Bezugnahme auf die Figuren der Zeichnung anhand mehrerer Ausführungsbeispiele näher erläutert. Es zeigen:
- Figur 1: den grundsätzlichen Ablauf eines ersten Verfahrens zur Herstellung eines polykristallinen Werkstoffs durch Metallpulverspritzgießen unter Verwendung einer Suspension mit Nanopartikeln;
- Figur 2a: schematisch die Ablaufschritte einer ersten Variante zum Herstellen des Feedstocks;
- Figur 2b: schematisch die Ablaufschritte einer zweiten Variante zum Herstellen des Feedstocks;
- Figur 2c: schematisch die Ablaufschritte einer dritten Variante zum Herstellen des Feedstocks;
- Figur 3a: den grundsätzlichen Ablauf eines zweiten Verfahrens zur Herstellung eines polykristallinen Werkstoffs;
- Figur 3b: eine Ausführungsvariante des Verfahrens der Figur 3a;
- Figur 4: schematisch den Aufbau eines nach einem Verfahren gemäß der Figur 1, 3a oder 3b hergestellten polykristallinen Werkstoffs nach dem Sintern, wobei Einzelkristalle und an die Korngrenzen der Einzelkristalle angelagerte Nanopartikeln dargestellt sind.

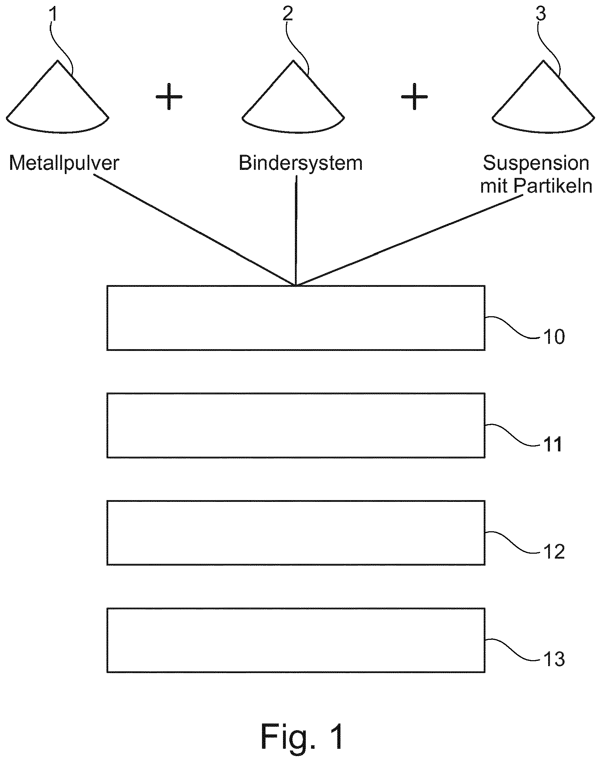

Die Figur 1 zeigt schematisch ein Verfahren zur Herstellung eines Bauteils aus einem polykristallinen Werkstoff durch Metallpulverspritzgießen, bei dem die Kriechbeständigkeit des Werkstoffs durch die Zugabe von Nanopartikeln verbessert wird.

In einem ersten Schritt 10 wird ein spritzgussfähiges Metallpulvergemisch, der Feedstock, bereitgestellt. Hierzu werden drei Komponenten zusammen gemischt. Bei der ersten Komponente handelt es sich um ein Metallpulver 1 aus Metallpartikeln. Die zweite Komponente ist ein Bindersystem 2. Die dritte Komponente ist eine Suspension 3 mit Nanopartikeln.

Bei dem Metallpulver 1 handelt es sich typischerweise um eine Legierung. Für Hochtemperaturanwendungen werden insbesondere Nickel- und Kobalt-Basis-Legierungen eingesetzt. Beispiele hierfür sind die Superlegierungen C1023, CM247, Inconel 713, Inconel 738. Die mittlere Korngröße der Partikel liegt beispielsweise im Bereich zwischen 30 µm und 300 µm.

Das Bindersystem 2 kann aus Polymeren bestehen. Beispiele für eingesetzte Polymere sind Polyamide, Wachs und/oder Polyoxymethylen (POM). Auch können benetzungsfördernde Zusätze zugefügt werden.

Für das Metallpulver 1 und das Bindersystem 2 kann grundsätzlich auf Metallpulver und Bindersysteme zurückgegriffen werden, wie sie im Stand der Technik bekannt sind.

Die Suspension 3 umfasst keramische Partikel, insbesondere Oxide wie zum Beispiel Yttriumoxid, Aluminiumoxid oder Zirkonoxid. In alternativen Ausführungsvarianten können metallische Partikel eingesetzt werden. Die Partikel sind Nanopartikel. Dies schließt im Sinne der vorliegenden Erfindung nicht aus, dass sie Korngrößen umfassen können, die bis zu einige Mikrometer betragen. So weisen die keramischen Nanopartikel beispielsweise eine Siebgröße von 10 nm bis 5 Mikrometer auf. In weiteren Ausgestaltungen liegen die Siebgrößen im Bereich zwischen 10 nm und 1 µm oder im Bereich zwischen 20 nm und 100 nm.

Gemäß einem Ausführungsbeispiel weisen die keramischen Nanopartikel eine Partikelgröße im Bereich zwischen 60-80nm auf. Hierbei handelt es sich um den D50 Faktor, d.h. 50% aller Partikel sind kleiner als dieser Wert. Für die Erhöhung der Kriechbeständigkeit an den Korngrenzen kommen auch größere Partikel in Betracht. So können die keramischen Partikel Partikelgrößen von einigen hundert Nanometern bis hin zu wenigen Mikrometern haben (100nm bis 5µm).

Die Nanopartikel werden in der Suspension benetzt, wodurch Agglomerationen der Nanopartikel verhindert oder zumindest deutlich reduziert werden. Bei einer Suspension sind die Partikel in eine Lösung (das Dispersionsmedium) eingebracht, die die Oberfläche der Partikel benetzt und somit ein Agglomerieren ("Verklumpen") entgegen wirkt. Die Lösung besteht in der Regel aus einer Flüssigkeit, die zum Beispiel Ethanol, Wasser oder Glycerin sein kann. Der flüssige Anteil der Suspension muss kein Reinstoff sein, sondern kann seinerseits ein Gemisch darstellen. So kann die Trägerflüssigkeit eine Lösung, eine Emulsion oder eine unsedimentierte Dispersion sein. Solche Suspensionen sind Stand der Technik und können entsprechend den Anforderungen des vorliegenden Nanopulvers hergestellt werden. Die Suspension wird zusammen mit den anderen Bestandteilen des Feedstocks (Binder und Metallpulver) so zusammengemischt, dass eine homogene Verteilung der Suspension und somit der keramischen Partikel in den resultierenden Feedstock vorliegt. Je nach Zusammensetzung des Feedstocks kann das Mischen mechanisch durchgeführt werden (bei Raumtemperatur oder erhöhter Temperatur). Eine erhöhte Temperatur verringert die Viskosität des Binders und kann somit den Mischvorgang im Sinne der Homogenität positiv beeinflussen.

Das Mischungsverhältnis von keramischen Partikeln der Suspension 3 zu dem Metallpulver 1 liegt beispielsweise im Bereich zwischen 0,25 Massenprozent und 1 Massenprozent. Bei diesem Mischungsverhältnis werden als Metallpulver beispielsweise Partikel aus einer Nickelbasislegierung eingesetzt.

Das Mischungsverhältnis von Bindersystem 2 zu Metallpulver 1 ist grundsätzlich dem Stand der Technik nachgebildet und beträgt typischerweise 50-70 Volumenprozent Metallpulver und 30-50 Volumenprozent Binder. Je nach verwendeter Legierung und Bindersystem ergeben sich Massenverhältnisse von ca. 90-95% Metallpulver und 5-10% Binder.

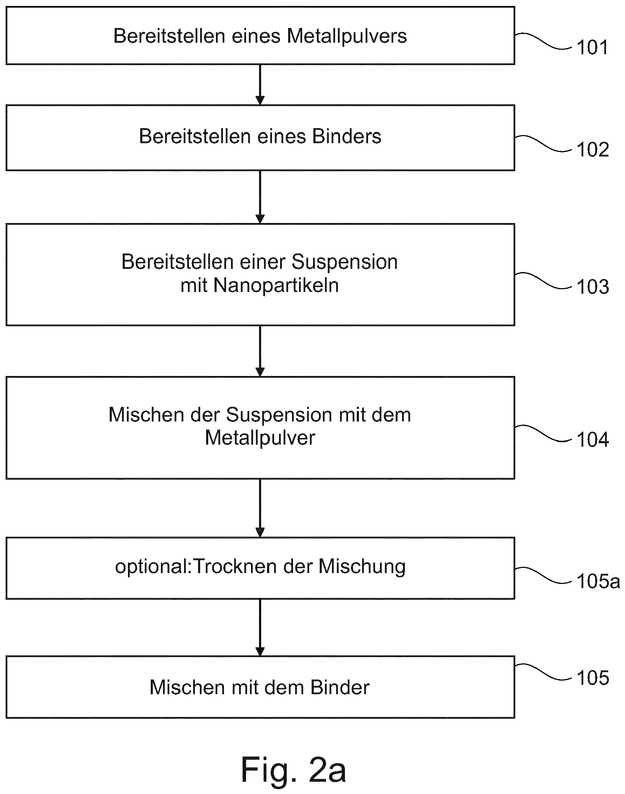

Verschiedene Verfahrensvarianten zum homogenen Mischen der drei Komponenten Metallpulver 1, Bindersystem 2 und Suspension 3 werden in Bezug auf die Figuren 2a bis 2c beschrieben. Gemäß der Figur 2a werden zunächst in den Verfahrensschritten 101, 102, 103 wie bereits besprochen das Metallpulver 1, der Binder 2 und die Suspension 3 mit Nanopartikeln bereitgestellt. Anschließend wird im Verfahrensschritt 104 die die Nanopartikel enthaltende Suspension 3 mit dem Metallpulver 1 vermischt. Hierbei lagern sich Nanopartikel an den Korngrenzen der Metallpartikel des Metallpulvers 3 an. Anschließend erfolgt im Verfahrensschritt 105 eine homogene Mischung mit den Binder. Dabei kann gemäß einer Ausführungsvariante vorgesehen sein, dass vor einem Mischen mit dem Binder im optionalen Verfahrensschritt 105a die Mischung von Suspension 3 mit dem Metallpulver 1 getrocknet wird, um das Dispersionsmedium vor dem Mischen mit dem Binder zu verflüchtigen.

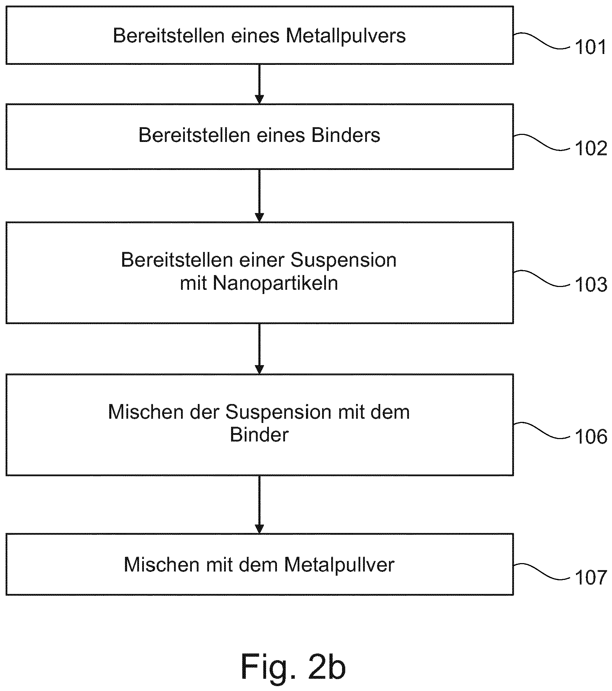

Gemäß der Verfahrensvariante der Figur 2b werden in den Verfahrensschritten 101, 102, 103 wiederum zunächst das Metallpulver 1, der Binder 2 und die Suspension 3 mit Nanopartikeln bereitgestellt. Anschließend wird in Verfahrensschritt 106 die Suspension 3 mit den Nanopartikel mit dem Binder 2 vermischt. Das Gemisch wird anschließend im Verfahrensschritt 107 mit dem Metallpulver homogen vermischt. Bei dieser Verfahrensvariante sind die Nanopartikel in geringerem Maße bereits im Feedstock an den Korngrenzen der Metallpartikel des Metallpulvers 3 angelagert.

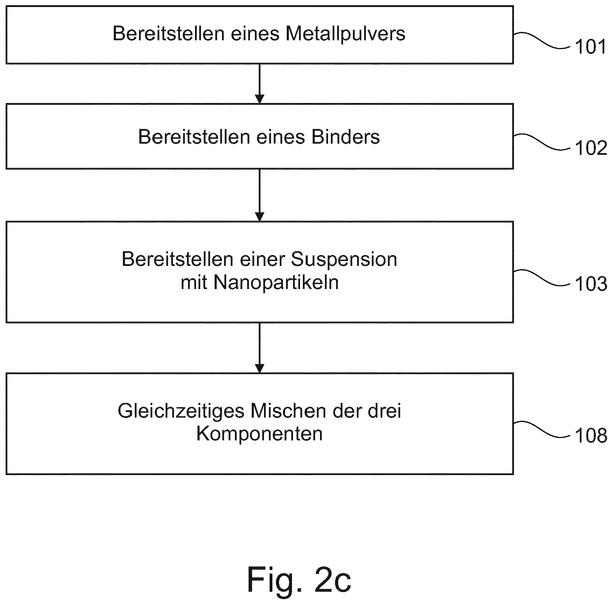

Gemäß der Verfahrensvariante der Figur 2c werden in den Verfahrensschritten 101, 102, 103 wiederum zunächst das Metallpulver 1, der Binder 2 und die Suspension 3 mit Nanopartikeln bereitgestellt. Anschließend werden in Verfahrensschritt 108 das Metallpulver 1, das Bindersystem 2 und die Suspension 3 mit Nanopartikeln gleichzeitig homogen gemischt.

Bezug nehmend erneut auf die Figur 1 schließt sich nach Herstellen des Feedstocks im Verfahrensschritt 10 ein Metallpulverspritzgussprozess an. Die genauen Prozessparameter hängen dabei von den Feedstockbestandteilen ab, insbesondere den verwendeten Materialien und dem Mischungsverhältnis von Metallpulver 1 und Bindersystem 2. Im Verfahrensschritt 11 wird der Feedstock in eine Kavität einer Spritzgussform eingespritzt. Nach dem Spritzgussprozess wird das entstandene Werkstück aus der Kavität entfernt (sogenanntes Entformen). Der abgekühlte Feedstock bildet einen Grünling des herzustellenden Bauteils.

Im nachfolgenden Verfahrensschritt 12 wird der entstandene Grünling entbindert. Der Prozess des Entbinderns des Grünlings kann in an sich bekannter Weise erfolgen. Es kann insbesondere ein chemisches Herauslösen des Binders und/oder ein thermisches Austreiben des Binders erfolgen. Dabei entsteht ein Bräunling des herzustellenden Bauteils. Es ist nun für die Erfindung von Bedeutung, dass beim Prozess des Entbinderns die Nanopartikel zumindest teilweise im Grünling verbleiben. So sind die Nanopartikel, ohne dass es hierzu besonderer Maßnahmen bedarf, im Grünling an den Korngrenzen angelagert und/oder verbleiben in den im Grünling noch vorhandenen Zwischenräumen zwischen den Körnern bzw. Partikeln des Metallpulvers.

Im Verfahrensschritt 13 wird der Bräunling gesintert. Dies erfolgt typischerweise bei Temperaturen im Bereich zwischen 1100 °C und 1300 °C. Der Sinterprozess geht einher mit einem gewissen Schrumpfen des Bauteils.

Anders als bei Standard ODS Legierungen (z.B. PM1000, PM2000), bei denen die keramischen Nanopartikel über mechanisches Legieren in das Korn eingemahlen werden und üblicherweise im Produkt einen Abstand von ca. 100-200nm haben, kommen bei der vorliegenden Erfindung bevorzugt Legierungen zum Einsatz, die bereits im Korn einen stark verfestigende Phase haben und somit gute Kriecheigenschaften besitzen. Durch das Einbringen von keramischen Partikeln an den Korngrenzen wird die Kriechbeständigkeit weiter gesteigert, indem ein Korngrenzengleiten und Diffusionsprozesse an den Korngrenzen behindert werden. Als mögliche Legierungen kommen beispielsweise hochlegierte Nickelbasis-Legierungen zum Einsatz wie zum Beispiel: Inconel 713, Inconel 738, CM247 bzw. MAR M247, C263, C1023.

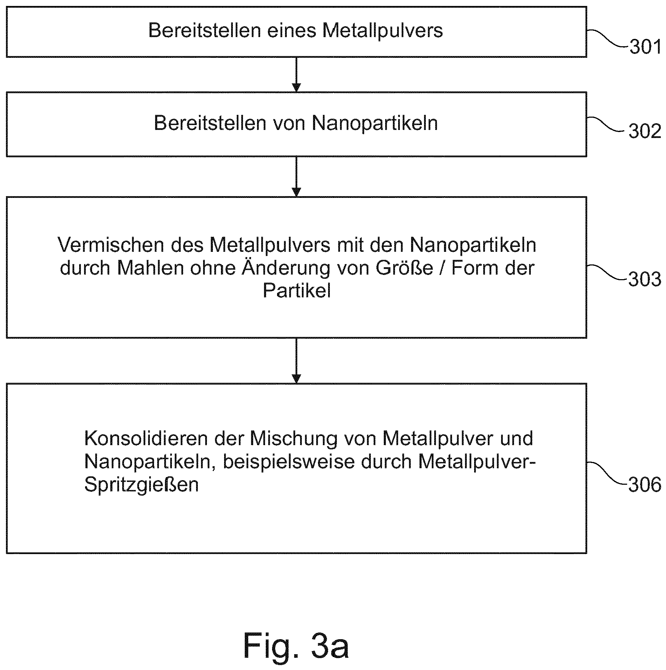

Die Figur 3a zeigt ein weiteres Verfahren zur Herstellung eines kriechbeständigen Werkstoffs. Ausgangspunkt des Verfahrens gemäß Figur 3a sind lediglich zwei Komponenten, nämlich zum einen ein Metallpulver aus Metallpartikeln und zum anderen metallische oder keramische Nanopartikel.

In den Schritten 301 und 302 werden ein Metallpulver und eine Menge an Nanopartikeln bereitgestellt. Hinsichtlich der Größen und Größenverteilungen von Metallpulver und Nanopartikeln gelten die Ausführungen zu den Figuren 1 bis 2c in entsprechender Weise. So kann gemäß einer Ausführungsvariante vorgesehen sein, dass als Metallpulver hochlegierte Nickelbasis-Legierungen zum Einsatz wie zum Beispiel: Inconel 713, Inconel 738, CM247 bzw. MAR M247, C263, C1023. Der D50-Faktor des Metallpulvers liegt beispielsweise im Bereich zwischen 10 µm und 40 µm.

In einem konkreten Ausführungsbeispiel ist vorgesehen, dass der D50-Faktor der Partikel des Metallpulvers bei 18 µm, der D10 Faktor bei 6 µm und der D90 Faktor bei 35 µm liegt. Die spezifische Oberfläche der Partikel des Metallpulvers liegt bei dem konkreten Ausführungsbeispiel bei 0,1 m²/g.

Die Nanopartikel bestehen beispielsweise aus Yttriumoxid, Aluminiumoxid oder Zirkonoxid. Sie weisen beispielsweise einen D50-Faktor im Bereich zwischen 30 nm und 500 nm auf. In dem genannten konkreten Ausführungsbeispiel wird das unter dem Handelsnamen Alumina CT3000 LS SG verkaufte Aluminiumoxid der Firma Almatis oder ein anderes Aluminiumoxid als Nanopartikel verwendet. Der D50-Faktor des Aluminiumoxids liegt bei 500 nm und der D90-Faktor bei 2 µm.

In Schritt 303 wird das Metallpulver mit den Nanopartikeln durch Mahlen vermischt. Der Mahlvorgang erfolgt in einer Mühle, die beispielsweise als Planetenkugelmühle mit Mahlkugeln aus Stahl ausgebildet ist. Der Mahlvorgang erfolgt dabei in einer Ausgestaltung unter einer Schutzatmosphäre beispielsweise aus Argon. Der Mischung aus Metallpulver und Nanopartikel wird kann ein Mahlhilfsmittel hinzugefügt werden, das die Haftung der Nanopartikel an der Metalloberfläche erhöht. Das Mahlhilfsmittel ist beispielsweise auf der Basis von Polysacchariden gebildet.

Die Konzentration der Nanopartikel in der Mischung von Metallpulver und Nanopartikel liegt in Ausführungsbeispielen bei 0,5 Masseprozent, bei 1 Masseprozent oder bei 3 Masseprozent.

Die Mahldauer ist derart bemessen und derart auf die Größe der Metallpartikel und die Art der Mühle abgestimmt, dass beim Malen die Partikel des Metallpulvers und die Nanopartikel weder in ihrer Größe noch in ihrer Form verändert werden. Dementsprechend erfolgt der Mahlvorgang für eine relativ kurze Zeitdauer, beispielsweise für eine Zeitdauer von 10-20 Minuten, beispielsweise 15 Minuten.

Aufgrund der relativ kurzen Mahldauer weisen die sphärischen Metallpartikel anders als nach einem mechanischen Legieren auch nach dem Malen noch eine sphärischen Form auf. Die Nanopartikel sind nicht in die Metallpartikel eingearbeitet, sondern haben sich lediglich an der Oberfläche der Metallpartikel angelegt. Dabei verbessert das Mahlhilfsmittel die Haftung der Nanopartikel an der Oberfläche der Metallpartikel.

Nachdem die Partikel des Metallpulvers und die Nanopartikel im Verfahrensschritt 303 derart miteinander vermischt wurden, dass sich die Nanopartikel an den Oberflächen der Partikel des Metallpulvers angeordnet haben, erfolgt anschließend in Schritt 306 ein Konsolidieren der Mischung von Metallpulver und Nanopartikel zur Bildung eines Werkstoffs mit einer polykristallinen Metallstruktur. Die Konsolidierung erfolgt beispielsweise über ein Metallpulverspritzgießen. Dabei wird, wie in Bezug auf die Figuren 1 bis 2c erläutert, der im Verfahrensschritt 303 entstandenen Pulvermischung ein Binder zugemischt, um ein spritzgussfähiges Metallpulvergemisch zu erhalten, und erfolgt anschließend ein Spritzgießen des spritzgussfähigen Metallpulvergemischs in einer Spritzgussform, ein Entbindern des entstandenen Grünlings unter Ausbildung eines Bräunlings und ein Sintern des Bräunlings. Jedoch sind auch andere Konsolidierungsverfahren möglich, beispielsweise eine Konsolidierung über heißisostatisches Pressen oder selektives Laserschmelzen.

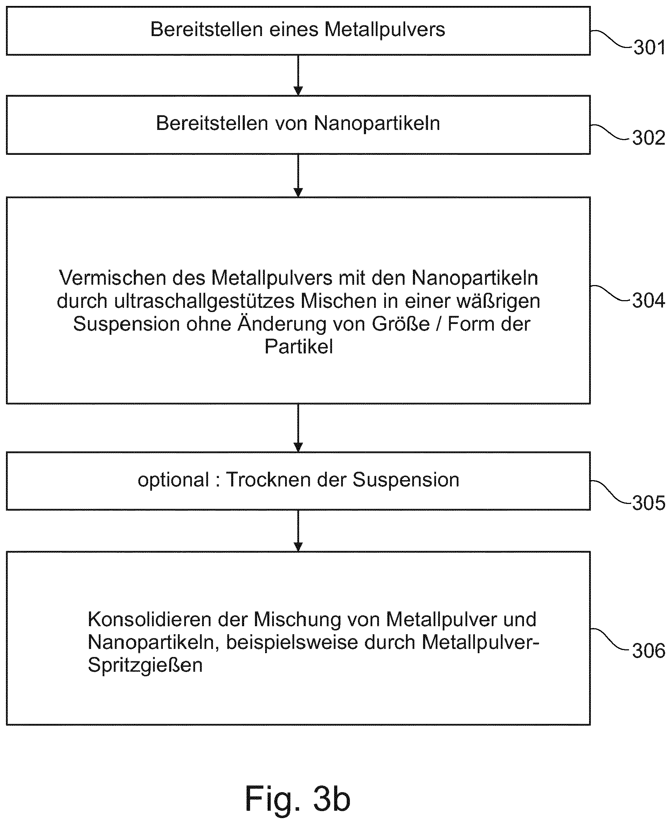

Die Figur 3b zeigt eine Abwandlung der Figur 3a, die sich in den Verfahrensschritten 304 und 305 vom Verfahren der Figur 3a unterscheidet. So wird der Schritt des Vermischens des Metallpulvers mit den Nanopartikel im Ausführungsbeispiel der Figur 3b in einer wässrigen Suspension ausgeführt. Dabei kann vorgesehen sein, dass in Schritt 302 die Nanopartikel bereits in der Suspension zur Verfügung gestellt werden, entsprechend Schritt 103 der Figur 2a.

Das Vermischen kann ultraschallgestützt erfolgen. Die durchmischte wässrige Suspension wird anschließend in dem optionalen Schritt 305 getrocknet, wobei sich eine agglomerationsfreie Verteilung der Nanopartikel auf den Metallpartikeln ergibt.

Anschließend wird die so hergestellte Partikelmischung mit einem Binder gemischt, um ein spritzgussfähiges Metallpulvergemisch bereitzustellen. Alternativ wird von einem Trocknen der wässrigen Suspension abgesehen, wobei diese sogleich mit einem Binder gemischt wird. Für diesen Fall entfällt der optionale Schritt 305.

Die weiteren Konsolidierungsschritte erfolgen wie in Bezug auf die Figur 3a beschrieben. Auch kann eine Konsolidierung mittels alternativer Verfahren erfolgen.

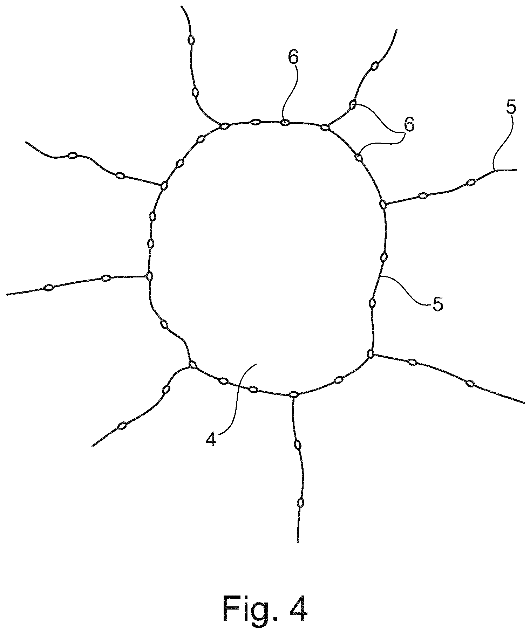

Die Figur 4 zeigt schematisch die Bausteine einer kriechbeständigen Legierung mit einer polykristallinen Metallstruktur, die gemäß einem Verfahren nach Figur 1, nach Figur 3a oder nach Figur 3b hergestellt ist. Die Legierung umfasst Einzelkristalle 4 (auch als Körner bezeichnet), die beim Sintern jeweils aus einem Partikel des Metallpulver 1 hervorgegangen sind. An das dargestellte Einzelkristall 4 schließen sich weitere Einzelkristalle an. Die Einzelkristalle bzw. Körner 4 sind durch Korngrenzen 5 voneinander getrennt, bei denen es sich um Strukturen handelt, die auf die ursprüngliche Getrenntheit der Metallpartikel vor dem Sintern zurückgehen. Anders als beim Grünling befinden sich zwischen den Einzelkristallen 4 jedoch keine Zwischenräume.

Die in den Feedstock über die Suspension 3 eingebrachten Nanopartikel 6 (Figur 1) bzw. die beim Vermischen der Pulver an die Oberfläche der Metallpartikel angelegten Nanopartikel (Figuren 3a, 3b) sind erhalten geblieben und fein verteilt an den Korngrenzen 5 der Einzelkristalle 4 angelagert. Durch die Anlagerung der Nanopartikel 6 an den Korngrenzen 5 verhindern diese, dass die Korngrenzen 5 bei hohen Temperaturen unter Last aneinander gleiten. Sie blockieren gewissermaßen eine Relativbewegung zwischen den Einzelkristallen 4. Das Resultat ist ein hochkriechfester Werkstoff, in dem der Kriechwiderstand an den Korngrenzen über die eingebrachten Nanopartikel 6 erhöht worden ist.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise sind die konkret für die Nanopartikel und das Metallpulver genannten Materialen nur beispielhaft zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Verfahren zur Herstellung eines kriechbeständigen Werkstoffs mit den Schritten:
- Bereitstellen (301) eines Metallpulvers (1),
- Bereitstellen (302) von metallischen oder keramischen Nanopartikeln (6),
- Vermischen (303, 304) des Metallpulvers mit den Nanopartikeln (6), wobei bei dem Vermischen die Partikel des Metallpulvers (1) und die Nanopartikel (6) weder in ihrer Größe noch in ihrer Form verändert werden, und
- Konsolidieren (306) der Mischung von Metallpulver (1) und Nanopartikeln (6) zur Bildung eines Werkstoffs mit einer polykristallinen Metallstruktur, wobei
- die aus der Konsolidierung hervorgegangenen Einzelkristalle (4) der polykristallinen Metallstruktur aus den Partikeln des Metallpulvers (1) entstanden und durch Korngrenzen (5) voneinander getrennt sind, und wobei an den Korngrenzen (5) die Nanopartikel (6) angeordnet sind.

2. Verfahren nach Anspruch 2, **dadurch gekennzeichnet, dass** das Vermischen (303) des Metallpulvers (1) mit den Nanopartikeln (6) durch Mahlen in einer Mühle erfolgt, wobei die Nanopartikel sich beim Vermischen an den Oberflächen der Partikel des Metallpulvers (1) anordnen, und wobei die Mahldauer, die Art der Mühle und die Größe der Partikel des Metallpulvers und der Nanopartikel derart aufeinander abgestimmt sind, dass beim Mahlen die Partikel des Metallpulvers und die Nanopartikel weder in ihrer Größe noch in ihrer Form verändert werden.

3. Verfahren nach Anspruch 2, **dadurch gekennzeichnet, dass** die Mahldauer im Bereich zwischen 5 min und 30 min, insbesondere im Bereich zwischen 10 min und 20 min liegt.

4. Verfahren nach einem der vorangehenden Ansprüche, **dadurch gekennzeichnet, dass** der Schritt des Vermischens (303) unter Verwendung eines Mahlhilfsmittels erfolgt, das die Haftung der Nanopartikel an der Metalloberfläche erhöht.

5. Verfahren nach einem der Ansprüche 1 bis 3, **dadurch gekennzeichnet, dass** der Schritt des Vermischens (304) das Mischen des Metallpulvers (1) und der Nanopartikel (6) in einer wässrigen Suspension umfasst.

6. Verfahren nach Anspruch 5, **dadurch gekennzeichnet, dass** das Mischen (304) des Metallpulvers (1) und der Nanopartikel (6) in einer wässrigen Suspension ultraschallgestützt erfolgt.

7. Verfahren nach Anspruch 6, **dadurch gekennzeichnet, dass** die wässrige Suspension nach dem Mischen getrocknet wird, wobei sich beim Trocknen (305) der wässrigen Suspension eine Verteilung der Nanopartikel auf den Oberflächen der Partikel des Metallpulvers (1) bildet.

8. Verfahren nach einem der vorangehenden Ansprüche, **dadurch gekennzeichnet, dass** die Mischung von Metallpulver und Nanopartikeln durch Metallpulverspritzgießen (306) konsolidiert wird.

9. Verfahren zur Herstellung eines Bauteils aus einer kriechbeständigen Legierung, mit den Schritten:
- Bereitstellen (101) eines Metallpulvers (1),
- Bereitstellen (102) eines Binders (2),
- Bereitstellen (103) einer Suspension (3) mit metallischen oder keramischen Nanopartikeln (6), wobei die Nanopartikel (6) einen kleineren mittleren Durchmesser aufweisen als die Partikel des Metallpulvers (1),
- Mischen (104-108) dieser drei Komponenten (1, 2, 3) zu einem spritzgussfähigen Metallpulvergemisch, und
- Einsetzen des Metallpulvergemischs in einem Spritzgussverfahren, in dem das Metallpulvergemisch konsolidiert und zu dem Bauteil aus einer kriechbeständen Legierung geformt wird,
- wobei die Nanopartikel (6) sich bei der Konsolidierung des Metallpulvergemischs an den Korngrenzen der polykristallinen Metallstruktur anlagern, die bei der Konsolidierung des Metallpulvergemisches entsteht.

10. Verfahren nach einem der vorangehenden Ansprüche, **dadurch gekennzeichnet, dass** die Konzentration der Nanopartikel in der Mischung von Metallpulver und Nanopartikeln im Bereich zwischen 0,1 und 3 Massenprozent, insbesondere im Bereich zwischen 0,2 und 1 Massenprozent, insbesondere im Bereich zwischen 0,3 und 0,7 Massenprozent liegt.

11. Verfahren nach einem der vorangehenden Ansprüche, **dadurch gekennzeichnet, dass** die (6) Nanopartikel Oxide sind.

12. Verfahren nach Anspruch 11, **dadurch gekennzeichnet, dass** die Nanopartikel (6) aus Yttriumoxid, Aluminiumoxid oder Zirkonoxid bestehen.

13. Verfahren nach einem der vorangehenden Ansprüche, **dadurch gekennzeichnet, dass** die Nanopartikel (6) Siebgrößen aufweisen, die im Bereich zwischen 10 nm und 5 µm, insbesondere im Bereich zwischen 10 nm und 1 µm, insbesondere im Bereich zwischen 300 nm und 700 nm liegen.

14. Verfahren nach einem der vorangehenden Ansprüche, **dadurch gekennzeichnet, dass** die Nanopartikel (6) einen D90 Faktor kleiner oder gleich 2 µm und einen D50 Faktor kleiner oder gleich 500 nm aufweisen.

15. Verfahren nach einem der vorangehenden Ansprüche, **dadurch gekennzeichnet, dass** die Partikel des Metallpulvers Nickel- und/oder Kobalt-Basis-Legierungen aufweisen oder aus solchen besteht.
